# EUROPEAN PATENT APPLICATION

(11) **EP 1 264 670 A1**
(43) Date of publication of application: **11.12.2002**
(21) Application number: 02253888.8
(22) Date of filing: 05.06.2002
(51) Int. Cl.: B29B 17/00, B29C 43/20

(54) **Method of forming a thermoplastic product**

(30) Priority: 08.06.2001 GB 0113972
(71) Applicant: Atkins, Kelly, Hertfordshire AL3 4AZ (GB)
(72) Inventor: Atkins, Kelly, Hertfordshire AL3 4AZ (GB)
(74) Representative: Swindell & Pearson

(57) **Abstract**

A method of forming a thermoplastic product includes the provision of an article having a plurality of polymeric components. Heat and pressure are applied to the article to fuse the components together to form the thermoplastic product. The method further includes releasing the pressure on the thermoplastic product and thereafter removing the product.

## Description

The present invention relates to a method of forming a thermoplastic product, particularly but not exclusively from a carpet piece.

Unwanted carpet is generally discarded in landfill sites. This creates environmental problems since some carpets take up to fifty years to biodegrade. One solution to this growing problem is to recycle used or scrap carpet. Most carpets include a fibre layer and a backing layer and conventional recycling techniques involve the separation of these layers at some stage of the recycling process. However, this is an awkward operation and reduces the cost effectiveness and efficiency of the recycling process. Conventional recycling processes also usually require the carpet to be recycled to be shredded prior to processing.

According to the invention there is provided a method of forming a thermoplastic product comprising providing an article having a plurality of polymeric components, applying heat and pressure to said article causing the polymeric components to fuse together to form the thermoplastic product, releasing the pressure on said thermoplastic product, and removing the thermoplastic product after releasing the pressure.

Preferably, the article is a carpet arrangement. Preferably the carpet arrangement includes a carpet piece, suitably a piece of waste carpet, including a backing layer and a pile layer. The carpet arrangement may include a plurality of carpet pieces.

A plurality of carpet pieces may be stacked as part of the carpet arrangement and the pile layers of abutting carpet pieces may be arranged in face to face relationship.

Alternatively, a plurality of carpet pieces may be placed alongside each other. Adjacent carpet pieces may be separated by a zip. The zip may be made of a material which does not melt during the fusing step, such as a metal zip. Alternatively the zip may be of a material which melts during the fusing step, such as a plastics material. In one embodiment, the zip may be a nylon zip.

The product may be removed directly after the release of said pressure.

Preferably, the pressure is provided by compressing means which may comprise first and second article engaging surfaces. The article engaging surfaces may be planar, or of any other suitable configuration.

At least one of said article engaging surfaces may be heated to apply said heat to the article. The article engaging surfaces are preferably mutually facing.

Preferably, the carpet arrangement is placed on one of the article engaging surfaces prior to the fusing step. The carpet arrangement is preferably placed between the article engaging surfaces. The carpet arrangement is preferably cut to correspond in size and shape to the article engaging surfaces.

Preferably, the carpet arrangement includes a releasing agent, which is placed on a, or each, surface of the carpet piece between the carpet piece and each article engaging surface to facilitate removal of the thermoplastic product. The releasing agent may be tracing paper, preferably 150 to 200 ms/g grade tracing paper, and this is preferably also provided to the dimensions of the article engaging surfaces.

Preferably, the carpet arrangement includes planar heat conducting members, between which the carpet piece is sandwiched, or between which the carpet piece and releasing agent are sandwiched. The heat conducting members may be in the form of metal sheets, which may be of aluminium.

The planar members are preferably also provided to substantially the dimensions of the article engaging surfaces.

A cover piece may be placed on the pile layer of the carpet piece at an initial stage of the method. The cover piece may fuse into the carpet piece during the fusing step to provide a cover of different material for the thermoplastic product. The cover piece may comprise a reclaimed material, for example fruit sacking, hessian, nylon scaffolding netting, threads and cottons, laces, ultra violet netting, hair nets, elastic, leather, suede, plasterers' steel, aluminium wire, fuse wire, wire mesh, chicken wire, wire wool and metal chippings. The cover piece may comprise neoprene, commercial rubber, silicone fine grit, gravel seed or saw dust. The cover piece may provide a protective cover and preferably a decorative cover.

The compressing means is preferably a press, such as a vulcanising press, a wood laminating press or a heat transfer press, and each article engaging surface may comprise a platen. The article engaging surfaces may be moved towards each other, for example by tightening, to apply heat and pressure to the carpet arrangement.

The temperature of the compressing means may be maintained between 140°C and 180°C during the fusing step, preferably between 150°C and 165°C. The fusing step may last between about 5 minutes and 30 minutes depending upon properties of the carpet piece, such as material composition and dimensions, more preferably between 6 minutes and 25 minutes and most preferably between 7 minutes and 20 minutes.

The article engaging surfaces may be separated to release pressure on the thermoplastic product and to allow it to cool. Once the article engaging surfaces are separated, the planar members and the releasing agent may be removed.

Preferably the releasing agent is removed after the thermoplastic product has been cooled to a solid state. The releasing agent may peel away from the thermoplastic product as it cools, preferably leaving a smooth finish to the product.

The thermoplastic product may be shaped by cutting, filing, sawing, drilling or any other suitable shaping procedure.

Alternatively, the thermoplastic product and releasing agent may be moulded into the shape of a desired item whilst the thermoplastic product is still warm, preferably above 130°C, and malleable.

The thermoplastic product may be arranged in a mould, for example in a male portion of a mould, which may be of iron, steel, wood or any other suitable material, and preferably a female portion is pressed onto the male portion by a press, such as a fly press, to form the desired item. The thermoplastic product is preferably left to set in the mould for up to 30 minutes, and most preferably between 10 and 12 minutes. The item is preferably left to cool to allow the releasing means to separate from the desired item.

The carpet piece may contain polypropylene, nylon, zylon propylene or any combination thereof.

According to a further aspect of the invention there is provided a thermoplastic product manufactured using the above described method.

An embodiment of the present invention will now be described by way of example only, with reference to the accompanying drawings in which:
Fig. 1 shows a carpet arrangement for use in the method of the invention;
Fig. 2 shows a vulcanising press for use in the invention;
Fig. 3 shows a fly press for use in the invention; and
Fig. 4 shows male and female portions of a mould for use in the manufacture of a thermoplastic product according to the invention.

The preferred embodiment of this invention involves the recycling of a carpet piece having a plurality of polymeric components by using a compressing means to apply conditions of temperature and pressure to the carpet piece in order to cause the polymeric components of the carpet to fuse together to form a useful product.

Compressing means in the form of a vulcanising press 10 is used to apply these conditions. The vulcanising press 10 is of the two column type and is constructed from cast iron. The vulcanising press 10 is bench mounted to prevent excessive movement during the pressing process. The vulcanising press 10 includes upper 12 and lower 14 platens.

Each platen 12,14 is rectangular in cross-section and includes a substantially planar, horizontal surface 16. The platens 12,14 are aligned such that the upper platen 12 is directly above the lower platen 14. The platens 12,14 are movable vertically relative to each other by virtue of the upper platen 12 being mounted on a threaded bar 18. At the top of the threaded bar is a handle 20 which is manually operable to turn the threaded bar 18 about its longitudinal axis. Such rotation causes the upper platen 12 to move vertically relative to the lower platen 14, but not to rotate. The handle 20 is operated manually and therefore fine adjustments can be made in the relative positions of the upper and lower platens 12,14 and consequently the pressure on any object located therebetween.

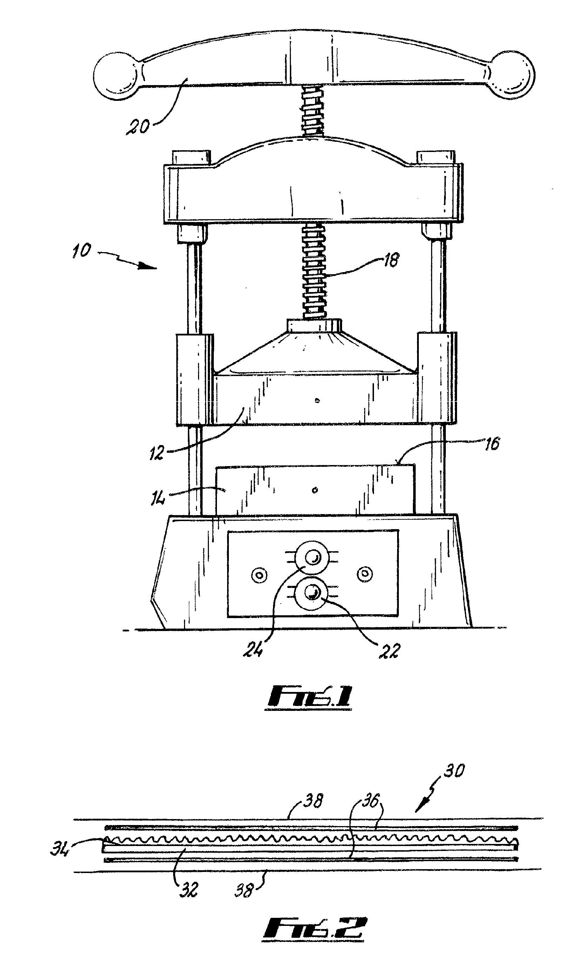

The platens 12,14 are able to be heated and an operating switch 22 is provided for this purpose on the vulcanising press 10 (see Fig. 1). The vulcanising press 10 also includes an indication light 24 to indicate when the platens 12,14 have been heated to a pre-determined required temperature. Typical working temperatures for fusing a carpet piece are between 150°C and 165°C and these can be reached from cold within about 40 minutes. A thermometer is also provided to check the temperature of each individual platen.

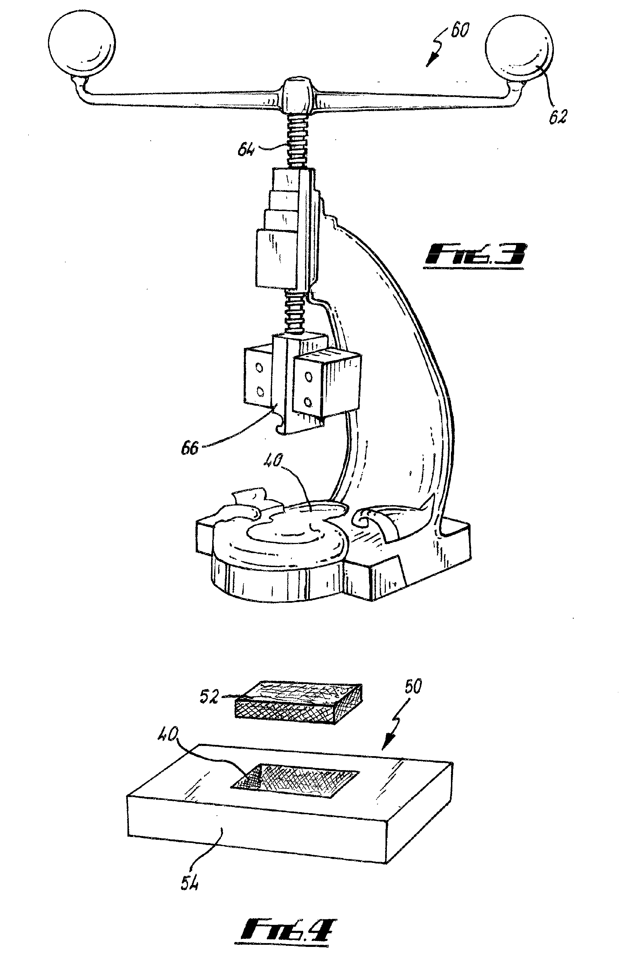

Fig. 2 shows a carpet arrangement 30 which has been prepared for use in recycling a carpet piece 32 using the vulcanising press 10. The carpet piece 32 is included towards the middle of the carpet arrangement 30 and includes a backing layer and a pile layer. In this example the carpet piece is made of 100% polypropylene. Any conventional carpet comprising a polymeric component or a combination of polymeric components may be recycled using the method of the present invention. Typical polymeric components include nylon, zylon polypropylene, acrylic and polyester. Some examples of suitable carpet compositions are shown in the following table:

| Carpet Composition | | | |
|---|---|---|---|
| 100% | Polypropylene | | |
| 100% | Zylon Polypropylene | | |
| 100% | Nylon | | |
| 80% | Acrylic | 20% | Nylon |
| 70% | Polypropylene | 30% | Polyester |
| 25% | Polypropylene | 75% | Nylon |
| 50% | Polypropylene | 50% | Nylon |
| 75% | Nylon | 25% | Polypropylene |

The carpet arrangement may alternatively include a stack of two or more carpet pieces arranged so that the pile layers of adjacent pieces are in face to face relationship. This has the effect of providing a thicker, stronger final product.

Another alternative is to provide a carpet arrangement having a plurality of carpet pieces alongside each other separated by one or more zips. The zips may be of metal, nylon or any plastics material. Using a metal zip provides a zip in the final product such that the final product is able to be divided using the functional zip. Using a nylon or plastics zip creates a hinge in the final product as the teeth of the zip melt and so the final product does not include a functional zip.

The carpet piece 32 is prepared by cutting it to the same dimensions as the dimensions of the flat horizontal surface 16 of each platen 12,14 of the vulcanising press 10. A range of cover materials 34 may be placed on the pile layer of the carpet piece 32 at this stage. The cover materials 34 will become attached to the carpet piece 32 during the fusing process. The cover materials 34 are varied and include materials such as fruit sacking, hessian, nylon scaffolding netting, threads and cottons, laces, ultra violet netting, hair nets, elastic, leather, suede, plasterer's steel, aluminium wire, fuse wire, wire mesh, chicken wire, wire wool, small metal chippings, 1 millimetre neoprene, 1 millimetre commercial rubber, 1 millimetre silicone, fine grit/gravel, bird seed, saw dust and other such materials. Due to their different properties when compared to the thermoplastic, these materials will form a protective and/or decorative cover on the final products of this method. The cover material 34 is also cut to the same dimensions as the carpet piece 32.

Releasing means in the form of two sheets of tracing paper 36 is then placed above and below the carpet piece 32 and cover material 34. In this example the tracing paper 36 is 150 to 200 ms/g grade tracing paper and is used to facilitate the removal of the final thermoplastic product from between the platens 12,14 following the fusion process. The tracing paper 36 is also of the same dimensions as the carpet piece 32.

Two planar members in the form of flat aluminium sheets 38 are next placed above and below the tracing paper 36 to complete the carpet arrangement 30. These aluminium sheets 38 will act as heat conductors during the fusion process and prevent the thermoplastic product from deforming when it is eventually removed from the vulcanising press 10. The aluminium sheets 38 are shown in Fig. 2 to be slightly larger than the rest of the carpet arrangement 30.

Once the carpet arrangement 30 is prepared, it is placed between the platens 12 and 14 of the vulcanising press 10. At this point the platens 12 and 14 should be at their operating temperature of between 150°C and 165°C. The carpet arrangement 30 is allowed to rest on the lower platen 14 whilst the handle 20 is manually operated to rotate the threaded bar 18 and lower the upper platen 12 into contact with the top aluminium sheet 38 of the carpet arrangement 30. As the handle 20 is rotated further, the pressure on the carpet arrangement 30 is increased. The handle 20 should be rotated as far as possible trapping the carpet arrangement 30 between the platens 12 and 14. The combination of heat and pressure causes the polymeric components of the carpet piece to begin melting and become malleable. At this temperature and pressure, the chains of the polymeric components are able to be cross-linked and a malleable thermoplastic product 40 is formed. The effect of placing the cover material 34 directly onto the pile layer of the carpet piece 32 prior to heating is to provide a cover 42 on the thermoplastic product 40 after heating. For example, if reclaimed neoprene is placed directly onto the carpet piece 32 prior to heating, it will laminate itself to the piece 32 giving the thermoplastic product 40 a cover 42 which is dent proof and even more durable than the thermoplastic product 40 itself.

The carpet arrangement 30 is left between the heated platens 12,14 and under pressure in the vulcanising press 10 for between 7 and 20 minutes depending upon the size and composition of the carpet piece 32 contained therein. When it is desired to remove the carpet arrangement 30, the handle 20 is operated manually to raise the upper platen 12 away from the surface of the carpet arrangement 30. The platens 12 and 14 are then allowed to cool down and in the meantime the carpet arrangement 30 is removed from its resting position on the lower platen 14 by handling the aluminium sheets 38.

If it is required to have a smooth finish on the surface of the thermoplastic product 40, then the carpet arrangement 30 is left to cool until the tracing paper 36 peels away from the thermoplastic product 40 as it solidifies. At this stage once the thermoplastic product 40 has cooled, it can be worked with in similar ways to wood. For example it can be cut, sawed, filed, drilled, etc.

The thermoplastic product 40 may be moulded into a desired shape 44 before it has cooled while it is still malleable. For this part of the process the thermoplastic product 40 is removed before its temperature has dropped to 130°C.

Fig. 4 shows a mould 50 having a male portion 52 and a female portion 54.

Whilst the thermoplastic product 40 is still above 130°C, it is placed in the female portion 54 of the mould 50. The female portion 54 is shaped correspondingly to a male portion 52 suitable to provide the desired shape 44 of a final item to be moulded. At this stage the mould 50 may be pre-heated but it is not essential. The male portion 52 of the mould 50 is pushed into place to correspond with the female portion 54.

The mould 50 is then placed on a fly press 60 (see Fig. 3) which is used to press the two portions 52, 54 of the mould firmly together. The fly press 60 includes a similar operating mechanism to the vulcanising press 10 in that it includes an operating handle 62 which is manually operated to rotate a second threaded bar 64 which causes a rod member 66 to move vertically downwards. The mould 50 is placed directly underneath the rod member 66 on the fly press 60. The handle 62 is then rotated to lower the rod member 66 into contact with the male portion 52 of the mould 50 and force it towards the female portion 54. This causes the thermoplastic product 40 to be pressed into the desired shape 44. The thermoplastic product 40 is left to form for about 10 to 12 minutes. Once the product 40 has cooled it is removed from the mould 50 and the tracing paper 36 will be easily removed from the product 40. It is particularly beneficial to use a flat surface to apply heat and pressure to the carpet arrangement initially since the size of the carpet piece to be recycled depends only upon the heated surface area available. In particular the carpet piece is not required to be cut or shredded into very small elements prior to the fusing step as in conventional carpet recycling processes which use screw extrusion machines.

Various modifications may have been made to the present invention without departing from its scope. It will be realised that any size of carpet may be recycled using this method to form a thermoplastic product, depending upon the size of heated surface available for use. The heated surface need not necessarily be provided on a vulcanising press. For example, a wood laminating press or a heat transfer press may be used. Alternatively a vacuum former may be used. The final moulding stage may not necessarily involve the use of a fly press.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of forming a thermoplastic product comprising providing an article having a plurality of polymeric components, applying heat and pressure to said article causing the polymeric components to fuse together to form the thermoplastic product, releasing the pressure on said thermoplastic product, and removing the thermoplastic product after releasing the pressure.

2. A method of forming a thermoplastic product according to claim 1, in which the article is a carpet arrangement including a carpet piece comprising a backing layer and a pile layer.

3. A method of forming a thermoplastic product according to claim 2, in which the carpet arrangement includes a plurality of carpet pieces.

4. A method of forming a thermoplastic product according to claim 3, in which the carpet arrangement includes a plurality of carpet pieces stacked such that the pile layers of abutting carpet pieces are arranged in face to face relationship.

5. A method of forming a thermoplastic product according to claim 3 or claim 4, in which the carpet arrangement includes a plurality of carpet pieces placed alongside each other.

6. A method of forming a thermoplastic product according to claim 5, in which adjacent carpet pieces are separated by a zip.

7. A method of forming a thermoplastic product according to any of the preceding claims, in which the pressure is provided by compressing means.

8. A method of forming a thermoplastic product according to claim 7, in which the compressing means comprises first and second article engaging surfaces.

9. A method of forming a thermoplastic product according to claim 8, in which the article engaging surfaces are planar, and at least one of the surfaces is heated to apply said heat to the article.

10. A method of forming a thermoplastic product according to claim 8 or claim 9, in which the carpet arrangement is placed between the article engaging surfaces and includes a releasing agent, which is placed on a, or each, surface of the or each carpet piece between the or each carpet piece and each article engaging surface to facilitate removal of the thermoplastic product.

11. A method of forming a thermoplastic product according to claim 10, in which the releasing agent is tracing paper.

12. A method of forming a thermoplastic product according to claim 10 or claim 11, in which the carpet arrangement includes planar heat conducting members, between which the or each carpet piece is sandwiched, or between which the or each carpet piece and releasing agent are sandwiched.

13. A method of forming a thermoplastic product according to any of claims 2 to 12, in which a cover piece is placed on the pile layer of the or each carpet piece at an initial stage of the method, whereby the cover piece fuses into the or each carpet piece during the fusing step to provide a cover of different material for the thermoplastic product.

14. A method of forming a thermoplastic product according to any of claims 7 to 13, in which the compressing means is a press.

15. A method of forming a thermoplastic product according to claim 14, in which the article engaging surfaces are moved towards each other, for example by tightening, to apply heat and pressure to the carpet arrangement.

16. A method of forming a thermoplastic product according to any of claims 9 to 15, in which the temperature of the compressing means is maintained between 140°C and 180°C during the fusing step.

17. A method of forming a thermoplastic product according to claim 16, in which the temperature is maintained between 150°C and 165°C.

18. A method of forming a thermoplastic product according to any of the preceding claims, in which the fusing step lasts between about 5 minutes and 30 minutes depending upon properties of the or each carpet piece, such as material composition and dimensions.

19. A method of forming a thermoplastic product according to any of claims 15 to 18, in which the article engaging surfaces are separated to release pressure on the thermoplastic product and to allow it to cool, whereby the planar members and the releasing agent are removed, and the releasing agent peels away from the thermoplastic product as it cools.

20. A method of forming a thermoplastic product according to any of claims 15 to 18, in which the article engaging surfaces are separated, the planar members are removed and the thermoplastic product and releasing agent are moulded into the shape of a desired item whilst the thermoplastic product is still warm.

21. A method of forming a thermoplastic product according to claim 20, in which the thermoplastic product is arranged in a mould, for example in a male portion of the mould, and in which a female portion is pressed onto the male portion by a press, such as a fly press, to form the desired item.
